# EUROPÄISCHE PATENTANMELDUNG

(11) **EP 0 666 430 A1**
(43) Veröffentlichungstag der Anmeldung: **09.08.1995**
(21) Anmeldenummer: 95100402.7
(22) Anmeldetag: 13.01.1995
(51) Int. Cl.: F16D 3/50, B63H 23/32

(54) **Wellenkupplung**

(30) Priorität: 04.02.1994 DE 4403477
(71) Anmelder: CENTA-ANTRIEBE KIRSCHEY GmbH, D-42781 Haan (DE)
(72) Erfinder: Kirschey, Gerhard, Dipl.-Ing., D-42329 Wuppertal (DE)
(74) Vertreter: Patentanwälte Ostriga & Sonnet

(57) **Zusammenfassung**

Dargestellt und beschrieben ist eine dreistufige drehelastische Wellenkupplung mit einer - in Reihenfolge ihrer Hauptwirkungen bei aus Leerlauf ansteigenden Drehmomenten - ersten hochdrehelastischen (11/17/23) Kupplungsstufe für den Leerlauf oder unteren Teillastbetrieb, einer phasenversetzt dazu hintereinandergeschalteten drehsteifen zweiten (17/20) Kupplungsstufe und einer wiederum drehweichen dritten Kupplungsstufe (12), die bei höherer Teillast bis Vollast die drehelastischen Eigenschaften des gesamten Kupplungsystems prägt. Die Besonderheit besteht darin, daß die dritte Kupplungsstufe antriebsseitig (10) angeordnet ist und die anderen Kupplungsbauteile ihren Platz im wesentlichen - auch in Achsrichtung - innerhalb des elastischen Ringkörpers (13) haben. Des weiteren kann die dritte Kupplungsstufe zugleich radialelastisch ausgeführt sein, womit das Kupplungssystem für den Einsatz an ungeflanschten Bootsantrieben besonders prädestiniert ist.

## Beschreibung

Die Erfindung bezieht sich auf eine dreistufige drehelastische Wellenkupplung nach dem Oberbegriff des Anspruchs 1.

Die Wahl der Bezeichnungen 'erste Kupplungsstufe', 'zweite Kupplungsstufe' und 'dritte Kupplungsstufe' folgt der Reihenfolge, in der die betreffenden Kupplungsstufen nacheinander wirksam werden, wenn der Antrieb aus dem Leerlauf bis zur Vollast hochgefahren wird.

Eine Wellenkupplung, von der die Erfindung ausgeht, ist unter dem Namen 'MerCruiser' bekannt und vorbenutzt. Sie wurde konstruiert, um neben der Gewährleistung hoher Drehelastizität unter erhöhter Teillast oder Vollast insbesondere im Leerlauf des Antriebs oder bei geringer Teillast auftretende Geräusche (das sogenannte "gear hammering" oder "gear clatter") zu vermindern. Solche Geräusche entstehen insbesondere in Verbindung mit im unteren Drehzahlbereich rauh laufenden Dieselmotoren geringer Zylinderzahl, wenn eine Kupplung für derartige Lastverhältnisse nicht drehweich genug ausgelegt ist.

Bei der erwähnten dreistufigen MerCruiser-Wellenkupplung ist der Kupplungsflansch über einen elastischen, relativ drehweichen Gummiringkörper (mittelbar) mit der Nabe verbunden, so daß das vom Schwungrad des Bootsmotors auf den Kupplungsflansch übertragene Drehmoment über diesen gummielastischen Ring auf die Nabe übertragen wird. Im Leerlauf und bei niedrigen Motordrehzahlen ist als elastisches Kupplungselement zunächst im wesentlichen nur diese Gummiringkupplung als erste Kupplungsstufe wirkungsmäßig in den Kraftfluß eingeschaltet, obgleich die später zu beschreibende dritte Kupplungsstufe stets auch im Kraftfluß liegt.

Mit der Abtriebsseite der ersten Kupplungsstufe ist sodann ein sekundäres Kraftübertragungsglied fest gekuppelt, welches mehrere, sich in Axialrichtung erstreckende Zapfen mit darauf aufgesteckten gummielastischen Hülsen trägt, die erheblich drehsteifer sind als das gummielastische Ringelement der ersten Kupplungsstufe. Die Zapfen mit den Hülsen greifen in, sich jeweils über Teilbereiche des Umfangs hinwegerstreckende, Längsausnehmungen innerhalb des Kupplungsflansches ein. Solange das Antriebsmoment im Leerlaufbereich oder bei geringer Teillast verbleibt, können die Zapfen mit den elastischen Hülsen in diesen Längsausnehmungen frei oszillieren, ohne an die Stirnwände der Längsausnehmungen anzustoßen.

Bei Erhöhung des Antriebsdrehmoments und dadurch bedingtem größerem Verdrehwinkel der Kupplungsteile zueinander reicht die Rückstellkraft des gummielastischen Ringes der ersten Kupplungsstufe allein nicht mehr aus, so daß nun eine größere Relativbewegung in Umfangsrichtung zwischen dem Kupplungsflansch und dem sekundären Kraftübertragungsglied und somit folglich auch zwischen den mit den gummielastischen Hülsen versehenen Bolzen und den Längsausnehmungen im Kupplungsflansch eintreten. Aufgrund der größeren Winkelwege gelangen nun die gummielastischen Hülsen an die in Drehrichtung des Kupplungsflansches weisenden Stirnwände der Längsausnehmungen und damit in kraft- bzw. drehmomentübertragende Funktion. Somit ist die, als Klauenkupplung ausgelegte, 'zweite Kupplungsstufe' in Aktion getreten.

Aus der bisherigen Beschreibung wird deutlich, daß die zweite Kupplungsstufe gegenüber der ersten Kupplungsstufe phasenverschoben zur Wirkung gelangt und, sobald sie wirksam wird, parallelgeschaltet mit der ersten Stufe eine Einheit bildet.

Eine - wie bislang beschriebene - zweistufige drehelastische Kupplung zeigt eine Dämpfungskennlinie, die im Leerlauf und im Teillastbetrieb bei Wirkung nur des aus dem Ringkörper bestehenden elastischen Kupplungskörpers einen flachen Anstieg aufweist und diese Kurve in einen relativ stark progressiv ansteigenden Ast übergeht, sobald sich die zweite Gruppe drehsteifer eingestellter elastischer Kupplungskörper zuschaltet.

Die eingangs erwähnte MerCruiser-Wellenkupplung weist sodann noch eine drehelastische dritte Kupplungsstufe auf. Sie besteht aus einem auf den Umfang der mit der Abtriebswelle drehfest verbundenen Nabe aufvulkanisierten Gummiring, der mit seinem Außenmantel unter hoher radialer Vorspannung von einem metallischen Ringkörper eingespannt gehalten ist, der seinerseits an dem zuvor erwähnten sekundären Kraftübertragungsglied befestigt ist. Der Ringkörper und die Nabe sind der zweiten Kupplungsstufe mit Abstand axial vorgelagert, die ihrerseits von der ersten Kupplungsstufe einen Abstand in Achsrichtung halten muß, so daß sich insgesamt eine erhebliche Baulänge der Kupplungskonstruktion ergibt.

Da die dritte Kupplungsstufe der abtriebsseitigen Nabe zugeordnet ist, ist sie stets in den Kraftfluß eingeschaltet. Sie entfaltet jedoch erst im Anschluß an das Wirksamwerden der zweiten Kupplungsstufe ihre Hauptwirkung, die dem Kupplungssystem gegenüber einer Zweistufenkupplung eine höhere Drehelastizität im oberen Drehzahl- bzw. Drehmomentbereich verleiht. Bezüglich der Dämpfungskennlinie bedeutet dies im wesentlichen einen weniger steil ansteigenden Kurvenast.

Vom Grundprinzip der dreistufigen Auslegung her ist die bekannte Kupplung also gut geeignet, durch Bereitstellung der ersten, sehr drehweichen Kupplungsstufe das Ziel zu erreichen, die entstehenden Geräusche im Leerlauf oder im Teillastbetrieb erheblich zu senken und das Kupplungssystem dennoch auch unter hoher Last noch drehweich agieren zu lassen.

Ein wesentlicher Nachteil der MerCruiser-Kupplung, von der die Erfindung ausgeht, besteht in ihrem recht aufwendigen und raumgreifenden Aufbau. Aufgabe der Erfindung ist es deshalb, eine dreistufige drehelastische Wellenkupplung der vorausgesetzten Art konstruktiv geschickter zu gestalten.

Die Erfindung löst diese Aufgabe in erster Linie und im wesentlichen durch die im Anspruch 1 aufgeführten Merkmale. Besonders vorteilhafte weitere Ausgestaltungen sind in den Unteransprüchen angegeben.

Damit entsteht eine im Gesamtaufbau vereinfachte und erheblich kompaktere Kupplung, indem nunmehr der Gummiring der dritten Kupplungsstufe von der Abtriebsseite zur Antriebsseite des Kupplungssystems verlagert ist, wo er - bei bedeutend größerem Durchmesser gegenüber der bekannten Ausführung - die übrigen Kupplungsstufen nahezu völlig umschließen kann. Der vergrößerte Durchmesser ist des weiteren vorteilhaft, weil er eine bessere Ventilation des Gummikörpers ermöglicht. Auch in dieser grundsätzlich anderen Anordnung an der Antriebsseite des Kupplungssystems kann die dritte Kupplungsstufe stets in den Kraftfluß eingeschaltet sein und weist diesbezüglich dennoch keine prinzipiell andere Wirkung auf als die MerCruiser-Kupplung.

Nach einer weiteren Ausgestaltung jedoch weicht die Erfindung von der bekannten Auslegung der dritten Kupplungsstufe als nahezu rein drehelastische Stufe ab, indem die dritte Kupplungsstufe nunmehr zugleich radialelastisch ausgelegt ist, so daß das Kupplungssystem insbesondere auch für nicht geflanschte Antriebe ohne weiteres eingesetzt werden kann, bei denen Achsversatz zwischen der Getriebewelle und der Abtriebswelle beherrscht werden muß.

Weitere vorteilhafte Merkmale und Ausgestaltungen des Gegenstandes der Erfindung verstehen sich auch aus der nachfolgenden Erläuterung eines Ausführungsbeispiels anhand der beiliegenden Zeichnungen. Es zeigen:
- Fig. 1: einen radialen Halbschnitt durch eine Wellenkupplung im lastfreien Zustand entsprechend der Schnittangabe I-I in Fig. 2 und
- Fig. 2: einen Radialschnitt durch die Kupplung der Fig. 1.

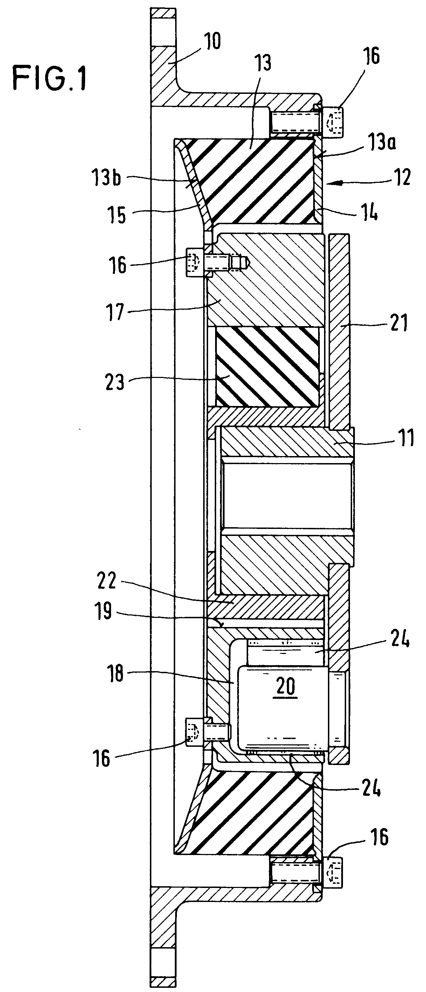

Die Dreistufenkupplung umfaßt zunächst einen Kupplungsflansch 10, der der Antriebsseite zugeordnet ist, und eine abtriebsseitig mit einer nicht gezeigten Welle z.B. eines Getriebes zu verbindende Nabe 11. Der Kupplungsflansch 10 ist, wie aus Fig 1 ersichtlich, im wesentlichen glockenförmig gestaltet und umschließt daher weitestgehend alle weiteren Bauelemente des Kupplungssystems.

In Richtung des Kraftflusses ist zunächst eine Kupplungsstufe 12 am Kupplungsflansch 10 angebracht. Diese Kupplungsstufe 12 ist eine Gummiringkupplung, deren elastischer Ringkörper 13 mit seinen in oder im wesentlichen in Axialrichtung weisenden Stirnflächen 13a und 13b mittels Vulkanisation zwischen Stahlringscheiben 14 und 15 gehaftet ist. Über die Ringscheibe 14 ist die Kupplungsstufe 12 mittels axial angeordneter Schrauben 16 am Kupplungsflansch 10 befestigt, während die Ringscheibe 15 zum Anschluß der weiteren Kupplungsteile dient. Die nach innen und außen weisenden Umfangsflächen des Gummiringkörpers 13 liegen frei, so daß die Kupplungsstufe 12 nicht nur drehelastisch ist, sondern zugleich auch nennenswert radialelastisch.

Nach innen und dem weiteren Verlauf des Kraftflusses folgend schließt an die Ringscheibe 15 - mittels wiederum axial ausgerichteter Schrauben 16 daran befestigt - ein im wesentlichen ringförmiger Scheibenkörper 17 an, der mit mehreren in Umfangsrichtung verlaufenden Längsausnehmungen 18 versehen ist, die radial außen von einer zentralen Ausnehmung 19 gelegen sind.

Die Längsausnehmungen 18 dienen zum axialen Eingriff von Klauen 20, die in gleicher Zahl wie die Ausnehmungen 18 an einer plattenartigen Scheibe 21 befestigt sind, die ihrerseits drehfest mit der Nabe 11 verbunden ist.

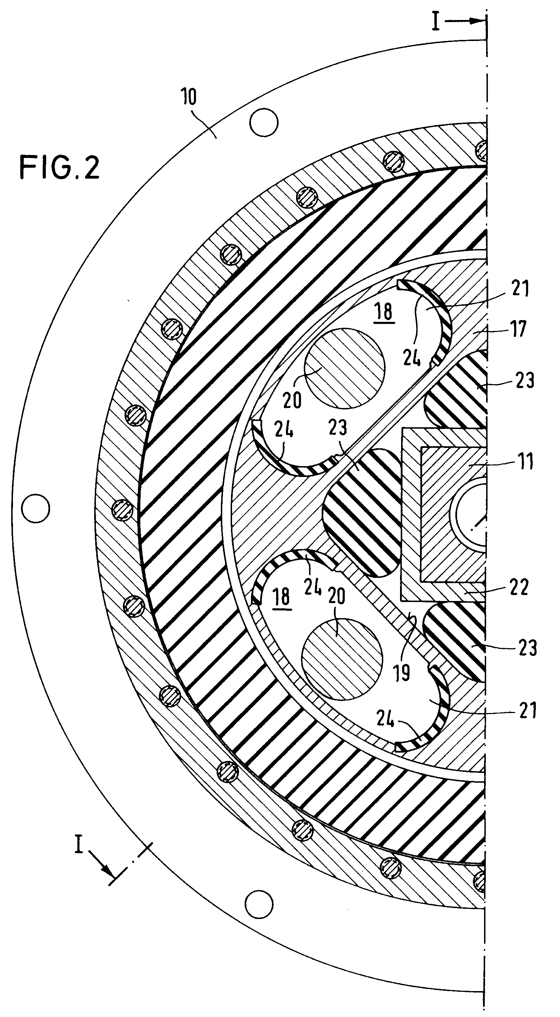

Die Umfangsausnehmung 19 im Ringkörper 17 weist entsprechend Fig. 2 einen polygonalen Umriß auf. Die Nabe 11 bzw. beim Ausführungsbeispiel eine formschlüssig mit ihr steckverbindbare Schiebehülse 22, weist ebenfalls einen entsprechenden polygonalen - beim Ausführungsbeispiel wiederum quadratischen - Außenumriß auf, jedoch mit kleineren Kantenlängen und somit kleinerem Durchmesser.

Zwischen dem inneren Umfang der Ausnehmung 19 und dem äußeren Umriß der Hülse 22 sind stab- bzw. walzenförmige gummielastische Körper 23 eingesetzt, und zwar in die Freiräume, die sich ergeben, wenn Nabe 11 und Ausnehmung 19, beim dargestellten vierseitigen Polygonal um 45^{o} umfangsversetzt zueinander angeordnet werden. Die gummielastischen Körper 23 sind unter erheblicher radialer Vorspannung vor den Außenflächen der Nabe 11 in die Kupplungsflansch-Ausnehmung 13 eingebracht. Dies geschieht mittels besonderer Einrichtungen werkseitig. Danach ist die Anordnung im praktischen Betrieb unlösbar.

Die elastischen Kupplungskörper 23 gehören zu der sog. 'ersten Kupplungsstufe' 11/17/23, die wesentlich drehweicher ausgelegt ist als die 'dritte Kupplungsstufe' 12 und erst recht als die erheblich drehsteifere 'zweite Kupplungsstufe' 17/20, die nach Art einer Klauenkupplung ausgebildet ist. Bei geringer Last erfolgt also die Drehmomentübertragung vom Kupplungsflansch 10 auf die Nabe 12 und die mit ihr gekuppelte Welle sowohl über die dritte Kupplungsstufe 12 als auch über die erste Kupplungsstufe 11/17/23, die jeweils dasselbe Drehmoment übertragen, wobei jedoch die erste Kupplungsstufe 11/17/23 im wesentlichen die Drehelastizität des Systems übernimmt.

An der Drehelastizität des Kupplungssystems hat in diesem Laststadium die dritte Kupplungsstufe, die stets in den Kraftfluß eingeschaltet ist, einen nur sehr geringen Anteil an den Verdrehwinkeln und wird - je nach Auslegung - vielleicht nur zu ca. 10% ihres Leistungsvermögens beansprucht. Die erste Kupplungsstufe mit ihren drehweichen, im wesentlichen nur auf Druck belasteten Gummielementen 23 ist somit also fast allein in der Lage, Drehschwingungen bis zu einem gewissen Grad zu dämpfen. Bei praxisnaher Auslegung reicht die erste Kupplungsstufe bis ca. 10% des Nenndrehmoments und 20^{o} Verdrehwinkel.

Bei größeren Drehmomenten und Schwingungsamplituden gelangt nun die Klauenkupplung 17/20 als zweite Kupplungsstufe phasenversetzt dadurch in Aktion, daß bei Erreichen bestimmter Drehwinkel zwischen dem sekundären Kraftübertragungsglied 21 und dem Scheibenkörper 17 die Klauen 20 an die in Umfangsrichtung weisenden Enden der Ausnehmungen 18 zur Anlage kommen. Hier sind elastische Polster 24 angebracht, die neben einer gewissen elastischen Wirkung auch den Zweck der Geräuschdämpfung haben.

In diesem Betriebszustand bildet die erste Kupplungsstufe 11/17/23 mit der zweiten Kupplungsstufe 17/20 eine Einheit, und mit zunehmender Last verdreht sich die dritte Kupplungsstufe 12 in Serie zu dieser Einheit und übernimmt schließlich fast die gesamte Drehelastizität des Kupplungssystems. Bei praxisnaher Auslegung ist die Kennlinie der dritten Kupplungsstufe 12 linear, und der Einfluß der harten zweiten Kupplungsstufe 17/20 praktisch nicht bemerkbar. Erreicht werden Verdrehwinkel von etwa 15^{o} in der dritten Kupplungsstufe 12; alle Kupplungsstufen zusammen ergeben insgesamt ca. 35^{o} Verdrehwinkel.. Außerdem bestimmt, und zwar in jedem Betriebszustand, die dritte Stufe 12 im wesentlichen die Radialelastizität des Gesamtsystems.

Die beschriebene dreistufige drehelastische Wellenkupplung besitzt ersichtlich einen einfachen Aufbau, der sich vor allem durch extrem kompakte Bauweise in Achsrichtung des Systems auszeichnet. Diese wurde vor allem möglich aufgrund der Anordnung des elastischen Ringkörpers 13 der dritten Kupplungsstufe 12 am antriebsseitigen Kupplungsflansch 10 und aufgrund der Integration der weiteren Kupplungsbauteile innerhalb ihres Innenumfangs unter gleichzeitiger Berücksichtigung weitestgehender Überdeckung in Axialrichtung.

## Patentansprüche

1. Dreistufige drehelastische Wellenkupplung für insbesondere Bootsantriebe, mit einer sehr drehweichen ersten Kupplungsstufe (11/17/23), einer dieser gegenüber erheblich drehsteiferen zweiten Kupplungsstufe (17/20) und einer wiederum drehweichen dritten Kupplungsstufe (12), wobei die Kupplungsstufen derart angeordnet sind, daß
bei Leerlauf oder geringer Last die erste und die dritte Kupplungsstufe (11/17/23 und 12) bei noch nicht wirksamer zweiter Kupplungsstufe (17/20) hintereinandergeschaltet sind und die erste Kupplungsstufe (11/17/23) den weitaus überwiegenden Anteil an der Drehelastizität hat,
im höheren Lastbereich die erste Kupplungsstufe (11/17/23) mit der zweiten Kupplungsstufe (17/20) phasenverschoben parallelgeschaltet ist und die so gebildete Einheit zur dritten Kupplungsstufe (12) hintereinandergeschaltet ist,
bei höheren Drehmomenten bis zur Vollast sich die aus erster und zweiter Kupplungsstufe (11/17/23 und 17/20) bestehende Einheit im wesentlichen drehsteif verhält und die dritte Kupplungsstufe (12) nahezu die gesamte Drehelastizität übernimmt,
und wobei zumindest die dritte Kupplungsstufe (12) als Gummiringkupplung ausgebildet ist, dadurch gekennzeichnet, daß die dritte Kupplungsstufe (12)
einerseits der Antriebsseite der Kupplung zugeordnet ist und
andererseits mit ihrem Ringkörper (13) die beiden anderen Kupplungsstufen (11/17/23 und 17/20) radial umgibt und daß
die erste und die zweite Kupplungsstufe (11/17/23 und 17/20) in Axialrichtung zumindest überwiegend in den Ringraum der dritten Kupplungsstufe (12) integriert sind.

2. Wellenkupplung nach Anspruch 1, dadurch gekennzeichnet, daß die dritte Kupplungsstufe (12) zugleich radialelastisch ausgebildet ist, indem der Gummiringkörper (13) lediglich zwischen im wesentlichen radial orientierten Ringflanschen (14, 15) befestigt ist.

3. Wellenkupplung nach Anspruch 1 oder 2, durch gekennzeichnet, daß die erste Kupplungsstufe (11/17/23) nach Art einer an sich bekannten Gummirollenkupplung mit zwischen der Nabe (11) und einem äußeren Polygon (19) gelagerten stabförmigen, gummielastischen Kupplungskörpern (23) und die zweite Kupplungsstufe (17/20) als Klauenkupplung ausgebildet ist, und daß die elastischen Kupplungskörper (24; 23) beider Kupplungsstufen im wesentlichen axialversatzfrei konzentrisch zueinander angeordnet sind.

4. Wellenkupplung nach Anspruch 1 oder einem der folgenden, dadurch gekennzeichnet, daß der Kupplungsflansch (10) im wesentlichen glockenförmig ausgebildet ist und die übrigen Kupplungsteile radial sowie zumindest überwiegend auch in Axialrichtung überdeckt.
